# DEMANDE DE BREVET EUROPEEN

(11) **EP 4 711 559 A1**
(43) Date de publication de la demande: **18.03.2026**
(21) Numéro de dépôt: 25190426.4
(22) Date de dépôt: 18.07.2025
(51) Int. Cl.: E04H 12/20, E02D 5/80, F16G 11/00, F24S 25/12, F24S 25/50, F24S 25/617, H02S 20/10

(54) **DISPOSITIF DE CONNEXION DE L'EXTREMITE D'UN HAUBAN A UN ANCRAGE**

(30) Priorité: 13.09.2024 FR 2409774
(71) Demandeur: TSE, 06560 Valbonne Sophia Antipolis (FR)
(72) Inventeur: LABORDE, Jérôme, 69480 Lachassagne (FR); RAIMBAULT, Etienne, 69006 Lyon (FR)
(74) Mandataire: Murgitroyd & Company

(57) **Abrégé**

Dispositif de connexion de l'extrémité d'un hauban à un ancrage, le dispositif comprenant une première bride munie d'un élément de connexion pour fixer ladite première bride à l'extrémité du hauban, une deuxième bride munie d'un élément de connexion pour fixer la deuxième bride à une ancre, une première et une deuxième tige de connexion pour relier la première bride à la deuxième bride, lesdites première bride et deuxième bride comprenant respectivement un premier et un deuxième moyen de connexion pour fixer les extrémités respectives de la première et de la deuxième tige de connexion, le premier et le deuxième moyen de connexion de la deuxième bride étant pourvus d'une liaison rotule.

## Description

### Domaine de l'invention

La présente invention concerne un dispositif de connexion de l'extrémité d'un hauban à un ancrage. Plus particulièrement, la présente invention concerne un dispositif de connexion du hauban d'une structure, pourvue de panneaux solaires, à un ancrage présent dans le sol.

### Etat de la technique

Dans l'état de l'art, il est connu d'utiliser des câbles de support ou haubans permettant de tendre une structure adaptée pour porter un ensemble de panneaux solaires.

Ces câbles de support ou haubans sont fixés entre les extrémités supérieures des éléments de construction verticaux de la structure et des ancrages présents dans le sol, à l'endroit où est positionnée la structure.

Selon l'état de l'art, des ancres, telles que des micropieux fixés dans le sol, sont utilisées. En règle générale, l'on utilise des blocs de béton ou massifs béton pour assurer la connexion entre l'ancrage fixé dans le sol et l'extrémité du hauban. Ces blocs de béton, du fait de leur taille et leur forme, fournissent des éléments intermédiaires permettant de tenir compte des tolérances entre un positionnement théorique des ancres dans le sol et la position réelle desdites ancres dans le sol après leur exécution.

En pratique, cela signifie qu'un bloc de béton, est mis en place au-dessus d'un ancrage, et qu'un élément de fixation est fixé dans le bloc de béton selon une position adaptée permettant de fixer l'extrémité du hauban.

La fonction de massifs béton est de permettre à la structure de s'accrocher aux fondations pour transmettre les efforts, tout en acceptant une légère tolérance de positionnement.

L'utilisation des massifs béton s'accompagne cependant d'un certain nombre d'inconvénients, notamment, entre autres :
- les massifs béton peuvent masquer des défauts de positionnement de l'ancrage;
- les massifs béton artificialisent une surface au sol non négligeable ;
- les massifs béton sont très visibles et peuvent laisser penser à des fondations en béton plus importantes qu'elles ne le sont en réalité,
- les massifs béton ont un impact significatif dans le bilan carbone de la structure, et
- la complexité de mise en oeuvre et le temps de séchage des massifs béton est une contrainte pour le chantier.

### Objet de l'invention

Compte tenu des observations ci-dessus, l'un des objectifs de la présente invention consiste à proposer une méthode alternative de fixation des extrémités des câbles de support ou haubans, ce qui évite l'utilisation des blocs de béton susmentionnés pour lier les ancrages.

Selon un premier aspect de l'invention, l'invention concerne un dispositif de connexion de l'extrémité d'un hauban à un ancrage, le dispositif de connexion comprenant :
- une première bride munie d'un élément de connexion pour fixer ladite première bride à l'extrémité du hauban,
- une deuxième bride munie d'un élément de connexion pour fixer la deuxième bride à l'ancrage,
- une première et une deuxième tige de connexion pour relier la première bride à la deuxième bride,
dans lequel la première bride et la deuxième bride comprennent respectivement un premier et un deuxième moyen de connexion pour fixer les extrémités respectives de la première et de la deuxième tige de connexion, le premier et le deuxième moyen de connexion de la deuxième bride comprenant une liaison rotule.

Selon un mode de réalisation de l'invention, ladite liaison rotule du premier et du deuxième moyen de connexion de la deuxième bride comprend un assemblage composé d'une rotule femelle et d'une rotule mâle.

Selon un mode de réalisation de l'invention, la deuxième bride comprend des moyens de réglage pour ajuster la position des premiers et deuxièmes moyens de connexion pour relier les premières et deuxièmes tiges de connexion aux deuxièmes brides.

Selon un mode de réalisation de l'invention, les moyens de réglage pour ajuster la position des premiers et des deuxièmes moyens de connexion pour la deuxième bride comprennent des ouvertures de fixation afin de permettre aux premiers et deuxièmes moyens de connexion d'être fixés à une position sélectionnée le long de la direction longitudinale desdites ouvertures de fixation.

Selon un mode de réalisation de l'invention, la première bride est essentiellement de forme longitudinale, l'élément de connexion pour la fixation de la première bride à l'extrémité du hauban étant positionné entre le premier et le deuxième moyen de connexion pour la fixation de la première et de la deuxième tige de connexion.

Selon un mode de réalisation de l'invention, la deuxième bride est essentiellement de forme longitudinale, l'élément de connexion pour la fixation de la deuxième bride à l'ancrage étant positionné entre le premier et le deuxième moyen de connexion pour la fixation de la première et de la deuxième tige de connexion.

Selon un mode de réalisation de l'invention, les premiers et deuxièmes moyens de connexion de la première bride sont pourvus d'une liaison rotule.

Selon un mode de réalisation de l'invention, l'élément de connexion pour fixer la deuxième bride à un ancrage est spécifiquement adaptée pour fixer la deuxième bride à l'extrémité d'un micropieu.

### Brève description des dessins

Les but, objet et caractéristiques de l'invention apparaîtront plus clairement à la lecture de la description qui suit faite en référence aux figures dans lesquelles :
[Fig. 1] montre une vue en perspective, d'une partie de la structure d'une centrale photovoltaïque tendue par un ensemble de haubans selon l'art antérieur,
[Fig. 2] représente une vue de dessus, schématique, d'une partie d'une centrale photovoltaïque,-tendue par un ensemble de haubans selon l'art antérieur,
[Fig. 3] montre une première vue, en perspective, d'un dispositif de connexion selon la présente invention, permettant de connecter un hauban à un ancrage fixé dans le sol, ledit dispositif de connexion étant lui-même connecté à l'extrémité supérieure d'un micropieu,
[Fig. 4] représente une seconde vue, en perspective, du dispositif selon la figure 3,
[Fig. 5] montre une coupe transversale d'un mode de réalisation d'une deuxième bride du dispositif de connexion selon les figures 3 et 4,
[Fig. 6] représente la fixation de la deuxième bride sur le hauban, et
[Fig. 7] montre selon une vue partielle en coupe, l'assemblage du hauban, des tiges filetées, des brides et du micropieu.

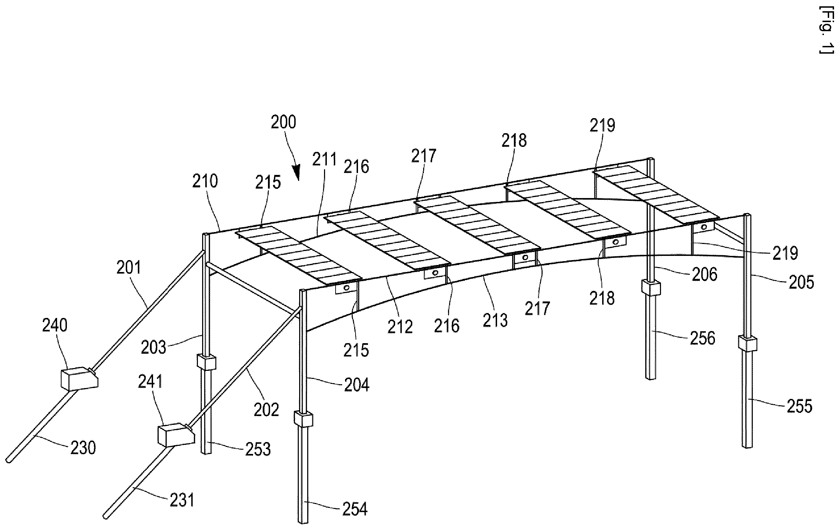

La figure 1 représente une vue en perspective d'une partie de la structure d'une centrale photovoltaïque 200 soutenue par un ensemble de haubans 201, 202. La centrale photovoltaïque 200 selon la figure 1 est connue dans l'art antérieur.

La centrale photovoltaïque 200 est pourvue de poteaux 203, 204, 205, 206 positionnés selon une direction verticale, chacun d'entre eux étant soutenu par un micropieu (ou un pieu battu) 253, 254, 255, 256. Les poteaux 203, 204, 205, 206 supportent, près de l'extrémité supérieure des poteaux 203, 204, 205, 206, les extrémités opposées des câbles 210, 211, 212, 213.

Les câbles 210, 211, 212, 213 portent des structures porteuses 215, 216, 217, 218, 219. Ces structures porteuses 215, 216, 217, 218, 219 sont utilisées dans le but de fixer les panneaux photovoltaïques 220 aux câbles 210, 211, 212, 213.

La figure 1 montre que chacune des structures porteuses 215, 216, 217, 218, 219 est, respectivement, connectée à un câble supérieur 210, 212 et à un câble inférieur 211, 213.

Selon l'art antérieur, les structures porteuses 215, 216, 217, 218, 219 sont connectées, selon une orientation fixe, aux câbles 210, 211, 212, 213. Les panneaux photovoltaïques 220 sont fixés auxdites structures porteuses 215, 216, 217, 218, 219, celles-ci étant équipées pour modifier l'inclinaison des panneaux photovoltaïques 220. Ce changement d'inclinaison est rendu possible grâce à la présence de moteurs électriques actionnés au moyen d'un système de commande. Les détails de ces parties spécifiques de la centrale solaire ne font pas partie de la présente invention et ne seront pas décrits en détail.

Les panneaux photovoltaïques 220 pouvant être orientés par rapport au soleil, cela permet d'optimiser leur utilisation tout au long de la journée et tout au long de l'année, et d'optimiser également la production d'électricité.

Pour des raisons de clarté, il est entendu que sur la figure 1, l'on a représenté uniquement une petite partie de la centrale photovoltaïque 200. Le nombre de poteaux 203, 204, 205, 206 peut être multiplié afin de pourvoir fixer, respectivement, un plus grand nombre de câbles 210, 211, 212, 213, un plus grand nombre de structures porteuses 215, 216, 217, 218, 219 et un plus grand nombre de panneaux photovoltaïques 220 sur la centrale photovoltaïque 200.

La centrale photovoltaïque 200, illustrée sur la figure 1, est connue de l'art antérieur. Les détails de la construction de la centrale sont, par exemple, décrits en détail au sein de la demande de brevet français FR 3,133,502.

La structure de la centrale photovoltaïque 200 présente l'avantage d'être pourvue de panneaux photovoltaïques 220 pouvant être fixés à une certaine distance par rapport au sol. Cela signifie que l'on peut utiliser le sol présent sous les panneaux photovoltaïques 220 pour l'agriculture.

La construction de la centrale photovoltaïque 200 connue permet d'obtenir une structure relativement légère et de faible coût, tout en limitant le nombre d'éléments verticaux pouvant constituer des obstacles lors de l'exploitation du sol sous les panneaux solaires. En l'absence d'éléments verticaux, les machines agricoles peuvent se déplacer librement sous l'ensemble des panneaux solaires 220.

Comme le montre la figure 1, la structure de la centrale photovoltaïque connue 200 est complétée par des câbles de soutien ou haubans 201, 202. Ces haubans sont utilisés afin d'exercer une tension sur l'extrémité supérieure des poteaux 203, 204 positionnés à l'extérieur de la centrale photovoltaïque 200. Les haubans 201, 202, représentés sur la figure 1, sont essentiellement positionnés en ligne avec les câbles 210, 211, 212 et 213 qui portent les structures porteuses 215, 216, 217, 218, 219 et les panneaux photovoltaïques 220.

La présence des haubans 201, 202 évite la flexion des poteaux 203, 204 sous le poids combiné des câbles 210, 211, 212, 213, des structures porteuses 215, 216, 217, 218, 219 et des panneaux photovoltaïques 220. De plus, la présence des haubans 201, 202 permet d'utiliser des poteaux verticaux plus légers et moins rigides dans la structure de la centrale photovoltaïque 200.

Selon l'exemple illustré sur la figure 1, les haubans 201, 202 sont reliés à des moyens d'ancrage fixés dans le sol. Lesdits moyens d'ancrage sont pourvus d'une ancre 230, 231 fixée dans le sol. Toujours selon cet exemple, les ancres 230, 231 se présentent sous la forme de micropieux implantés dans le sol. Un massif béton 240, 241 est mis en place à l'extrémité supérieure des ancres 230, 231.

L'extrémité des haubans 201, 202 est fixée respectivement aux massifs béton 240, 241.

Les massifs béton 240, 241 forment des moyens de connexion intermédiaires entre les ancres 230, 231 d'une part et les haubans 201, 202 d'autre part. Selon l'art antérieur, des massifs béton sont souvent utilisés à cette fin.

Cependant, l'utilisation des massifs béton 240, 241 s'accompagne d'un certain nombre d'inconvénients, entre autres :
- les massifs béton peuvent masquer des défauts de positionnement de l'ancrage;
- les massifs béton artificialisent une surface au sol non négligeable ;
- les massifs béton sont très visibles et peuvent laisser penser à des fondations en béton plus importantes qu'elles ne le sont en réalité,
- les massifs béton ont un impact significatif dans le bilan carbone de la structure, et
- la complexité de mise en œuvre et le temps de séchage des massifs béton est une contrainte pour le chantier.

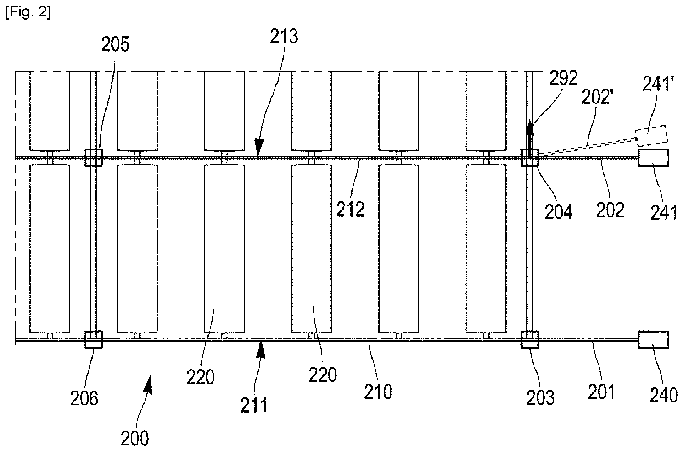

La figure 2 représente une vue de dessus schématique d'une partie de la centrale solaire 200 selon la figure 1. Le numéro de référence 201 indique la position du premier hauban fixé au bloc de béton 240. La figure 2 montre que le hauban 201 est orienté en ligne avec les câbles 210, 211 auxquels les panneaux photovoltaïques 220 sont connectés. Cela signifie que le hauban 201 exerce une tension sur l'extrémité supérieure du poteau 203 selon la direction opposée à la force exercée sur le poteau 203 par l'ensemble des câbles 210, 211, les structures porteuses (non représentées en détail sur la figure 2) et les panneaux photovoltaïques 220.

Dans la figure 2, le numéro de référence 202 est utilisé afin de faire référence à la position prévue du deuxième câble de support 202. Le numéro de référence 240 fait référence à la position prévue du bloc de béton 240 par rapport au poteau 204.

Dans l'exemple de la figure 2, le numéro de référence 202' indique la position réelle du deuxième hauban 202. Le second câble de support n'est pas correctement aligné par rapport au poteau 204 en raison d'un positionnement légèrement erroné du bloc de béton auquel le second câble de support est fixé. Dans l'exemple de la figure 2, le bloc de béton légèrement mal positionné est indiqué par le numéro de référence 241'.

La figure 2 montre de façon évidente que le deuxième hauban 202' exerce une certaine force transversale sur la partie supérieure du poteau 204, et ce en raison du mauvais alignement ou désalignement du deuxième hauban 202' par rapport au poteau 204. Cette force transversale est indiquée, de façon schématique, par une flèche à l'aide du numéro de référence 292. La présence de la force transversale 292 susmentionnée, sur un ou plusieurs poteaux 204 de la centrale photovoltaïque 200, peut entraîner le désalignement d'un ensemble de poteaux. Cela peut entraîner un dysfonctionnement des systèmes utilisés pour modifier l'orientation des panneaux photovoltaïques 220. De plus, la force transversale 292 peut engendrer une défaillance mécanique de la structure de la centrale photovoltaïque 200.

Par ailleurs, lors de l'utilisation et en raison du désalignement de l'assemblage du câble de support 202' et du massif béton connecté 241', des forces sont exercées sur ledit assemblage 202', 240' selon une direction différente de celle pour laquelle l'assemblage a été conçu. Au cours du temps, ce mauvais alignement des forces peut engendrer une défaillance mécanique de l'assemblage du hauban 202' et du massif béton 241'.

C'est un objectif de la présente invention de fournir un dispositif de connexion, pour connecter l'extrémité d'un hauban 201, 202 à un ancrage tel qu'un micropieu 230, 231, dans lequel la forme et la fonction dudit dispositif de connexion peuvent éviter au moins un ou plusieurs des inconvénients décrits ci-dessus liés à l'utilisation de blocs de béton 240, 241.

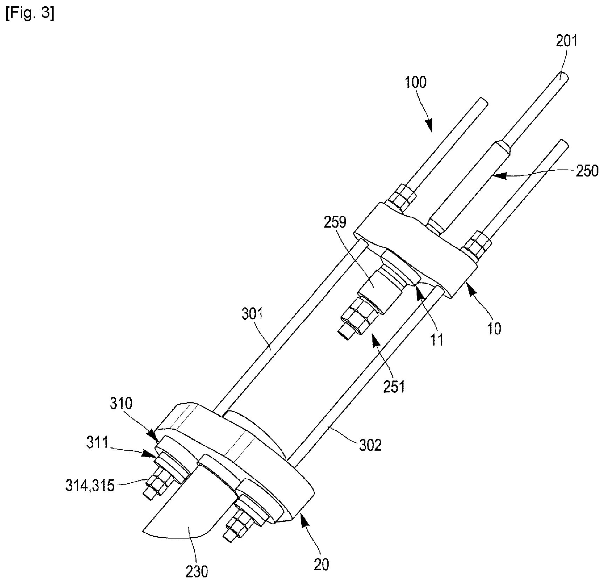

La figure 3 représente une première vue en perspective d'un dispositif de connexion 100 selon la présente invention. Selon l'exemple illustré sur la figure 3, le dispositif de connexion 100 est utilisé pour connecter l'extrémité du hauban 201 à l'ancrage sous forme d'un micropieu 230.

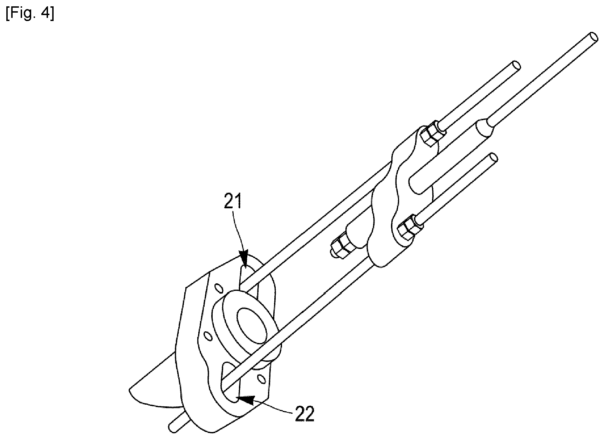

Le dispositif de connexion 100 est pourvu d'une première bride, ou bride supérieure 10 adaptée pour être fixée à l'extrémité du hauban 201. Cette première bride 10 se présente essentiellement sous une forme longitudinale, comme cela est visible sur les figures 3 et 4. La forme de la première bride peut être autre que longitudinale.

L'extrémité du câble 201 est fixée au centre de la première bride 10. Selon l'exemple illustré sur la figure 3, l'extrémité du hauban 201 est pourvue d'une partie filetée 250. Ladite partie filetée 250 du hauban 201 est fixée à la première bride 10 au moyen d'une rondelle 11 et de deux écrous 251. De façon optionnelle, un capteur de force 259 peut être présent entre la rondelle 11 et les écrous 251.

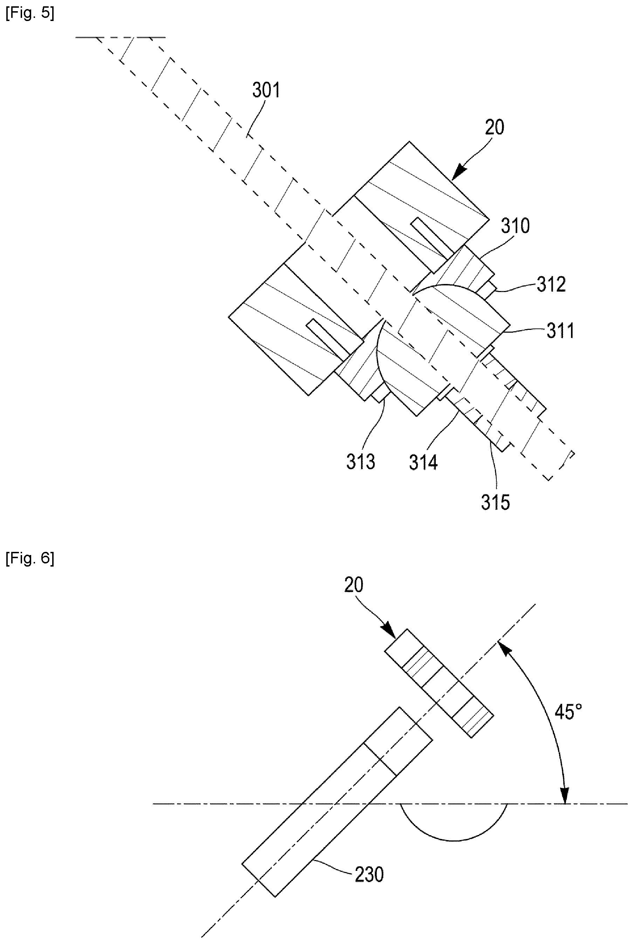

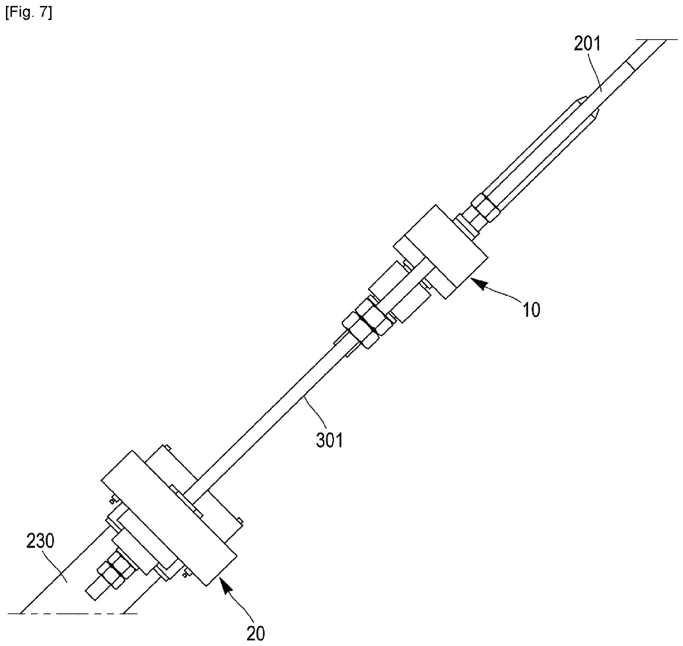

Le dispositif de connexion 100 est par ailleurs pourvu d'une deuxième bride 20 ou bride inférieure. Ladite deuxième bride 20 est destinée à être fixée à l'extrémité supérieure du micropieu 230. La deuxième bride 20 se présente sous une forme similaire à la première bride 10, c'est-à-dire de forme essentiellement longitudinale. Ceci est visible sur les figures 3 et 4 et sur les figures 6 et 7. La forme de la deuxième bride 20 peut être autre que longitudinale.

La deuxième bride 20 est reliée au micropieu 230 par la partie centrale de ladite deuxième bride 20.

La première bride 10 et la deuxième bride 20 sont mutuellement reliées au moyen de tiges de connexion, telle qu'une première tige filetée 301 et une deuxième tige filetée 302. La présence desdites tiges filetées 301, 302 permet à l'utilisateur d'effectuer des ajustements de distance entre la partie terminale du hauban câble 201 et le micropieu 230.

Les extrémités inférieures de la première et de la deuxième tige filetée 301, 302 sont reliées au moyen d'un assemblage d'une rotule femelle 310 et d'une rotule mâle 311. L'extrémité inférieure des tiges filetées 301, 302 est pourvue d'un filetage permettant de fixer les tiges filetées à cet assemblage 310, 311. L'utilisation de l'assemblage d'une rotule femelle 310 et d'une rotule mâle 311 est illustrée sur la figure 5.

La figure 4 représente une deuxième vue en perspective du dispositif de connexion 100 selon l'invention. La figure 5 montre la partie supérieure de la deuxième bride 20 dirigée vers la première bride 10.

La figure 4 montre, de façon évidente, que la deuxième bride 20 est pourvue d'ouvertures de fixation oblongues 21, 22, chacune étant adaptée pour recevoir l'assemblage susmentionné d'une rotule femelle 310 et d'une rotule mâle 311. La forme des ouvertures de fixation peut être autre qu'oblongue. Par exemple, à la place d'une seule ouverture oblongue, la deuxième bride 20 peux comprendre une série d'ouvertures adjacentes, chaque ouverture représentant une position de fixation pour les tiges filetées 301, 302.

La figure 5 représente une coupe transversale d'un mode de réalisation de la deuxième bride 20, afin de montrer sa fonctionnalité, et la connexion de la première tige filetée 301 dans la première ouverture de fixation oblongue 21 de ladite deuxième bride 20.

La figure 5 montre la fixation de la rotule femelle 310 à la deuxième bride 20, à l'aide de moyens de fixation 312, 313. L'ensemble composé de la première tige filetée 301, de la rotule femelle 310 et de la rotule mâle 311, est fixé à l'aide d'un écrou et d'un contre-écrou 314, 315. La rotule femelle 310 présente une ouverture inférieure concave fournissant un siège pour la rotule mâle 311. Grâce à leurs formes concaves/convexes complémentaires, la rotule femelle 310 et la rotule mâle 311 fournissent une flexibilité suffisante pour orienter le câble de connexion 301 par rapport à la deuxième bride 20. Cette flexibilité d'orientation permet à l'assemblage de la première bride 10, de la deuxième bride 20 et des tiges de connexion 301, 302 de compenser tout désalignement dans la position et l'orientation de l'extrémité du hauban 201 et du micropieu 230.

Selon l'exemple illustré sur la figure 6, le micropieu 230 est incliné par rapport à la verticale d'un angle de 45°. La deuxième bride est vissée sur le dessus du micropieu, à l'aide d'un filetage présent à la fois à l'intérieur de la deuxième bride 20 et à l'extérieur du micropieu 230.

La figure 7 montre l'assemblage, selon une vue partiellement en coupe, d'un hauban 201, des tiges filetées (seule la tige filetée 301 est représentée sur la figure 7), de la première bride 10, de la deuxième bride 20 et du micropieu 230.

La figure 7 montre que le hauban 201 est parfaitement aligné de façon perpendiculaire, par rapport à la deuxième bride 20, et ce grâce à la présence du dispositif de connexion 100 selon l'invention.

La figure 7 montre que la capacité d'ajustement, apportée par le dispositif de connexion 100, permet un alignement de la force de tension exercée par le hauban 201 sur la deuxième bride 20, évitant ainsi les tensions indésirables exercées par le hauban 201 sur la structure censée être soutenue par le hauban 201.

## Revendications

1. Dispositif de connexion (100) de l'extrémité d'un hauban (201, 202) à un ancrage, le dispositif de connexion (100) comprenant :
- une première bride (10) munie d'un élément de connexion pour fixer ladite première bride (10) à l'extrémité du hauban (201, 202),
- une deuxième bride (20) munie d'un élément de connexion pour fixer la deuxième bride (20) à l'ancrage,
- une première et une deuxième tige de connexion (301, 302) pour relier la première bride (10) à la deuxième bride (20),
dans lequel la première bride (10) et la deuxième bride (20) comprennent respectivement un premier et un deuxième moyen de connexion pour fixer les extrémités respectives de la première et de la deuxième tige de connexion (301, 302), le premier et le deuxième moyen de connexion de la deuxième bride comprenant une liaison rotule,
dans lequel la deuxième bride (20) comprend des moyens de réglage pour ajuster la position des premiers et deuxièmes moyens de connexion pour relier les premières et deuxièmes tiges de connexion (301, 302) à la deuxième bride (20),
dans lequel les moyens de réglage pour ajuster la position des premiers et des deuxièmes moyens de connexion pour la deuxième bride (20) comprennent des ouvertures de fixation (21, 22) afin de permettre aux premiers et deuxièmes moyens de connexion d'être fixés à une position sélectionnée le long de la direction longitudinale desdites ouvertures de fixation (21, 22).

2. Dispositif de connexion (100) selon la revendication 1, dans lequel ladite liaison rotule du premier et du deuxième moyen de connexion de la deuxième bride (20) comprend un assemblage composé d'une rotule femelle (310) et d'une rotule mâle (311).

3. Dispositif de connexion (100) selon l'une des revendications précédentes, dans lequel la première bride (10) est essentiellement de forme longitudinale, l'élément de connexion pour la fixation de la première bride (10) à l'extrémité du hauban (201, 202) étant positionné entre le premier et le deuxième moyen de connexion pour la fixation de la première et de la deuxième tige de connexion (301, 302).

4. Dispositif de connexion (100) selon l'une quelconque des revendications précédentes, dans lequel la deuxième bride (20) est essentiellement de forme longitudinale, l'élément de connexion pour la fixation de la deuxième bride (20) à l'ancrage étant positionné entre le premier et le deuxième moyen de connexion pour la fixation de la première et de la deuxième tige de connexion (301, 302).

5. Dispositif de connexion (100) selon l'une quelconque des revendications précédentes, dans lequel les premiers et deuxièmes moyens de connexion de la première bride (10) sont pourvus d'une liaison rotule.

6. Dispositif de connexion (100) selon l'une quelconque des revendications précédentes, dans lequel l'élément de connexion pour fixer la deuxième bride (20) à un ancrage est spécifiquement adapté pour fixer la deuxième bride (20) à l'extrémité d'un micropieu (230, 231).
